# EUROPEAN PATENT SPECIFICATION

(11) **EP 2 948 330 B1**
(45) Date of publication and mention of the grant of the patent: **24.04.2019**
(21) Application number: 13873110.4
(22) Date of filing: 19.12.2013
(51) Int. Cl.: B60K 11/08, B62D 35/00, F01P 1/06

(54) **COOLING OF AREAS BEHIND A VEHICLE ENGINE BY MEANS OF AIR DEFLECTORS**
KÜHLUNG VON BEREICHEN HINTER EINEM FAHRZEUGMOTOR MITTELS EINES LUFTLEITBLECHS
REFROIDISSEMENT DE ZONES DERRIÈRE UN MOTEUR DE VÉHICULE AU MOYEN DE DÉFLECTEURS D'AIR

(30) Priority: 23.01.2013 SE 1350068
(43) Date of publication of application: 02.12.2015
(73) Proprietor: Scania CV AB, 151 87 Södertälje (SE)
(72) Inventor: HÄLLQVIST, Thomas, S-144 40 Rönninge (SE); CHEVALIER, Mattias, S-647 35 Mariefred (SE); LAGERKVIST, Emelie, S-120 61 Stockholm (SE)
(74) Representative: Scania CV AB
(86) International application number: PCT/SE2013/051564
(87) International publication number: WO 2014/116161

(56) References cited:
- EP-A1- 0 774 402
- WO-A1-2011/142694
- DE-A1-102012 205 140
- GB-A- 2 275 234
- GB-A- 2 275 234
- US-A- 4 611 796
- US-A- 4 824 165
- US-A- 4 824 165
- US-A- 5 317 880

## Description

### BACKGROUND TO THE INVENTION AND PRIOR ART

The invention relates to an arrangement and a method for cooling an area at the rear side of a vehicle engine below and/or at a rear side of a cab of a freight vehicle. The invention relates also to a computer programme and a computer programme product.

Components situated below and/or at a lower rear side of a freight vehicle cab, e.g. gearbox and cab suspension, are often exposed to high temperatures from the vehicle's engine and as a result of conductive warming by the cooling air flow and radiation effects from warm components such as exhaust components. The problem is greatest at the locations where the vehicle has problems due to high component temperatures such that the ventilation of the engine space is insufficient. This often happens in situations where the vehicle is moving at low speeds, e.g. during reversing, when its speed is usually 60 km/h or less.

It is therefore desired to be able to cool the area behind the engine and portions of the vehicle's chassis which are close to the engine in order to prevent risk of the vehicle breaking down or of components disintegrating, but also to save costs by not having to use expensive high-temperature-resistant materials for such items as rubber and plastic parts, gaskets and electronic components.

A way of solving the problem is described in SE532307 which refers to a device for cooling an area behind a vehicle engine below or at a rear side of a cab of a freight vehicle. According to that invention a duct is provided to lead outside air into the area behind the engine, which duct extends rearwards and inwards towards said area from an inlet aperture on a side of the vehicle.

The air intake referred to in SE532307 is situated in a cramped space which entails risk of damp and dust accumulating in the intake and makes installing the intake complicated.

US5429411 refers to a roof air deflector comprising a plurality of bendable grilles for guiding the airflow, which air deflector is controlled either manually by the vehicle driver or automatically via vehicle-related functions such as brake pedal use.

US2009/0025994 refers to a wind-deflecting device situated between the cab and a superstructure/trailer, immediately above the engine space. The object of the device is to prevent downward airflows from reaching the engine space and thereby impairing the engine space cooling provided by inlet air from the radiator.

### SUMMARY OF THE INVENTION

An air deflector situated on the roof of a freight vehicle cab is adapted, when in a first position, to directing the airflow across a cargo-carrying unit with which the vehicle is provided, e.g. a superstructure. The air deflector is regulatable between said first position and a second position in order to be able in said second position to direct the airflow down by means of a guide surface into a space between the cab's rear side and the cargo-carrying unit, towards areas in the space and/or below the cab where the temperature is high.

At least one guide means is provided to guide substantially forwards in the vehicle's direction of movement the airflow directed towards the area of the rear side of the vehicle engine.

There is thus a need to cool components and areas of the vehicle, particularly at low vehicle speeds. Guide means and air deflectors are therefore used to move cold ambient air down to the engine space and/or the chassis and to cool components such as control electronics and sensitive plastic and rubber items in a cost-effective way.

One object of the present invention is therefore to propose an arrangement and a method for cooling an area at the rear side of a vehicle engine below and/or at the rear side of a cab of a freight vehicle. The expression "rear side of a cab" also US4824165 refers to an apparatus for selectively varying air resistance on a land transport vehicle to optimize reduction of drag except when drag is desirable as a speed reduction aid. The vehicle includes a cab and at least one trailing cargo container. An air deflector is mounted on the roof of the cab to normally deflect air over the top of the cargo container. The air deflector includes a relatively large opening therein for allowing air to freely pass therethrough and a door positioned in the opening and mounted for movement relative to the door. Means move the door between a first, relatively low drag position wherein the door covers the opening and air is deflected up and over the cargo container and a second, relatively high drag position wherein the door is retracted away from the opening and air is permitted to flow directly through the opening and against the forward end and top of the cargo container. Such a document also shows in Fig. 5 an air deflector which is regulatable between the first position (continuous lines in Fig. 5) and a second position (dotted lines in Fig. 5), in which second position the airflow is guided through a space between the air deflector (30) and the cab roof, and that at least one guide surface (inner surface of deflector 30) is situated at the height of the cab roof in order to direct towards the area at the rear side of the vehicle engine (third arrow starting from the top of Fig. 5) the airflow guided through the space. comprises exposed portions of the vehicle's chassis which are close to a vehicle engine.

A further object of the invention is to propose an arrangement which works on different truck models which are equipped with superstructures or trailers.

This object is achieved by the features indicated in the independent claims set out below.

Other features and advantages of the invention are indicated by the dependent claims and the description set out below.

### BRIEF DESCRIPTION OF THE DRAWINGS

Preferred embodiments of the invention are described below by way of examples with reference to the attached drawings, in which
Fig. 1 depicts a vehicle cab and cargo-carrying arrangement provided with a first guide means, a second guide means, a third guide means and a fourth guide means,
Fig. 2a depicts a vehicle cab provided with a first guide means in a first position,
Fig. 2b depicts a vehicle cab provided with a first guide means in a second position,
Fig. 3 depicts a vehicle cab provided with a first guide means according to an alternative embodiment, and
Fig. 4 is a flowchart illustrating the method according to the present invention.

### DETAILED DESCRIPTION OF EMBODIMENT EXAMPLE

The present invention will now be described with reference to the attached drawings, in which the same reference notations are used throughout to denote items which have the same or similar functions.

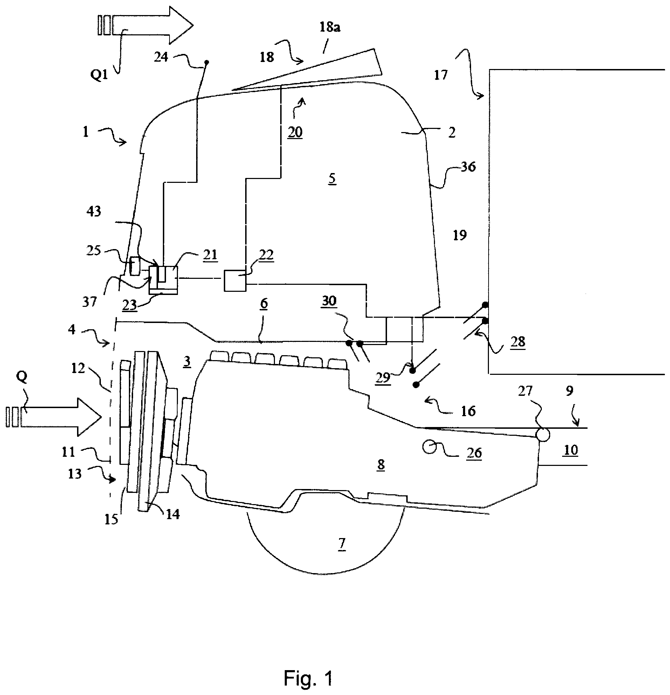

Fig. 1 depicts a heavy vehicle in the form of a freight vehicle 1 with a cab 2 and an engine space 3. The cab is provided with a front portion 4, cab sides 5, a cab floor 6 and a rear side 36. The cab sides 5 extend towards a vehicle frame 9. The freight vehicle 1 is provided with steerable front wheels 7 and undepicted tractive rear wheels and is powered by a unit in the form of an engine 8 situated in the vehicle frame 9, which comprises two parallel elongate side members 10 connected to one another by a number of undepicted cross-members, in order to transmit its propulsive torque to the tractive wheels via an undepicted power train.

In a front hatch 11 situated in the front portion 4 there is at least one inlet aperture 12 intended to supply air to a cooling system 13. The cooling system 13 contains a circulating coolant which is circulated in an undepicted pipe system. The circulating coolant is arranged to cool the engine 8 and gives up its heat in a first radiator element 14 situated at a front portion 4 of the freight vehicle 1. The diagram also shows a second cooling element 15 which may for example be a charge air cooler or an EGR cooler. The circulating coolant is cooled in the first radiator element 14 by surrounding air Q which flows in through the inlet aperture 12 and through passages in the second radiator element 15 and the first radiator element 14 before proceeding through the tunnel-like engine space 3, which the air thereafter leaves through an aperture at the rear edge of the engine tunnel 16.

Behind the cab 2 there is a cargo-carrying unit 17 which may take the form of a permanently fitted box, a trailer, a semitrailer or some other superstructure.

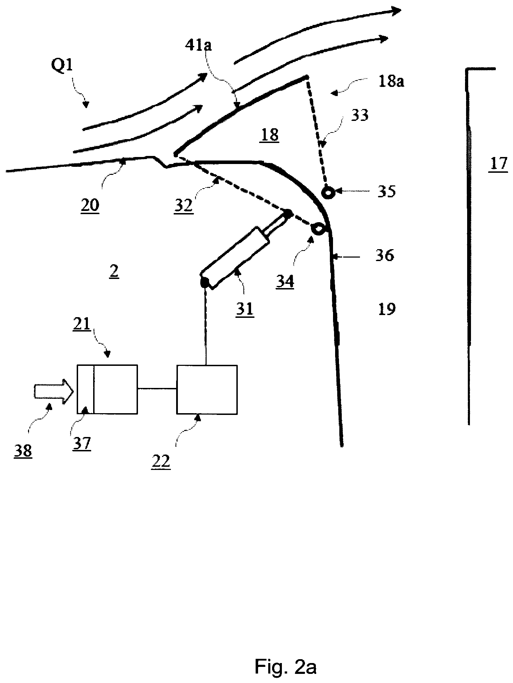

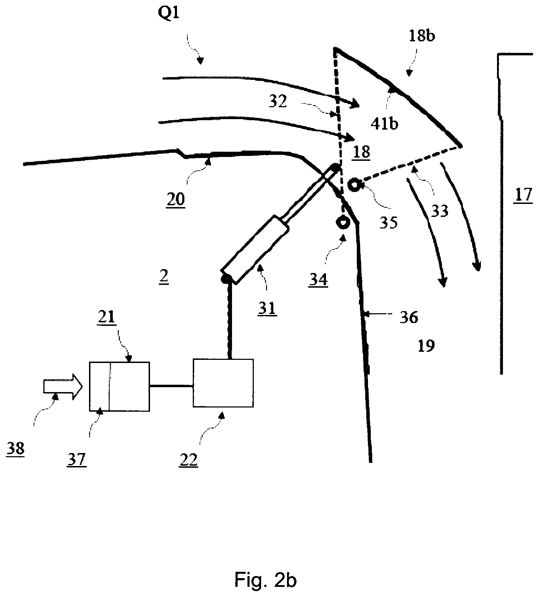

A first guide means 18, hereinafter called air deflector, is fitted on a roof 20 of the cab 2 and is regulatable between a first position and a second position. Fig. 1 and Fig. 2a depict the air deflector in the first position 18a in which an airflow Q1 is directed across the cargo-carrying unit 17. Fig. 2b depicts the air deflector in the second position 18b in which the airflow Q1 is directed down into a space 19 between the cab's rear side 36 and the cargo-carrying unit 17.

The freight vehicle 1 depicted in Fig. 1 has at least cab control unit 21, e.g. an electronic control unit (ECU). The cab control unit is adapted to receiving sensor signals from various parts and components of the vehicle and to delivering control signals in certain running conditions to switching means 22 which cause the air deflector 18 to move between the first position 18a and the second position 18b.

The cab control unit 21 is adapted to receiving sensor signals, e.g. concerning vehicle speed. A speed detection means 37, e.g. speed sensors, may in one embodiment be situated in the cab control unit 21.

Temperature detection means 26, 27, e.g. temperature sensors, are provided where high temperatures occur. In Fig. 1 they are strategically situated below the cargo-carrying unit 17 on the vehicle frame 9 and adjacent to the engine 8. Other locations are of course possible.

The switching means 22 is controlled by preprogrammed instructions in the cab control unit 21. The preprogrammed instructions typically take the form of a computer programme product 23 stored on a digital storage medium, e.g. a working memory, flash memory or a read-only memory, and are executed by the control unit 21. The vehicle's behaviour in a specific situation may be adapted by altering the preprogrammed instructions.

The cab control unit 21 is provided with a location determination means 43, e.g. a GPS receiver, which receives information from satellites via an antenna 24, calculates a location of the vehicle 1 and uses both to create a computerised version of the configuration of the itinerary. The cab control unit 21 is also adapted to receiving itinerary data from a topography read-off means 25, e.g. a camera or radar. A computerised version of the configuration of the itinerary, a read-off version of the itinerary or a combination of both may be used to obtain information, e.g. about the gradient of the road, and to determine whether there is or soon will be an increased cooling requirement, e.g. there may be problems due to high component temperatures during reversing of the vehicle.

Fig. 2a depicts schematically the air deflector 18 fitted on the roof 20 of the cab 2. The air deflector is regulated between the first position 18a and a second position 18b (depicted in Fig. 2b) by an actuating means 31. This actuating means 31 may for example be an air cylinder, a toothed rack or an electric motor. The actuating means 31 is connected to the switching means 22 either directly or via an undepicted activation means comprising an undepicted activation circuit, and is acted upon by control signals which the cab control unit 21 generates on the basis of information from speed detection means 37, temperature detection means 26, 27, topography read-off means 25 and/or location determination means 43. This information is represented in the diagram by the arrow 38. In an alternative embodiment the position of the air deflector is regulated manually by the driver, e.g. via a control in the cab (not depicted in the diagram).

As may be seen in Fig. 2a and Fig. 2b the air deflector 18 is provided with a forward link arm 32 and a rear link arm 33 (represented by broken lines in both drawings). The forward link arm 32 is arranged for pivoting relative to the roof 20 via a hinged fastening point 34, and the rear link arm 33 is arranged for pivoting at a separate fastening point 35 which is situated adjacent to the roof (not depicted in the diagram). The result is greater controllability in that the air deflector 18 can be adjusted both laterally and vertically by the actuating means 31 adjusting the forward link arm 32 and thereby also adjusting the rear link arm 33. In an alternative embodiment the forward link arm 32 and the rear link arm 33 are both arranged for pivoting relative to the roof 20 via the same hinged fastening point 34.

The actuating means 31 is connected to the forward link arm 32 or, not depicted in the diagram, adjacent to the fastening point 34 in order, when activated, to move the air deflector from the first position 18a to the second position 18b or back from the second position 18b to the first position 18a.

It may also be seen in the drawings that the air deflector 18 has an outer guide surface 41a for directing the airflow Q1 across the cargo-carrying unit 17 when the air deflector is in the first position 18a, and an inner guide surface 41b for directing the airflow Q1 down into the space 19 between the cab's rear side 36 and the cargo-carrying unit 17 when the air deflector is in the second position 18.

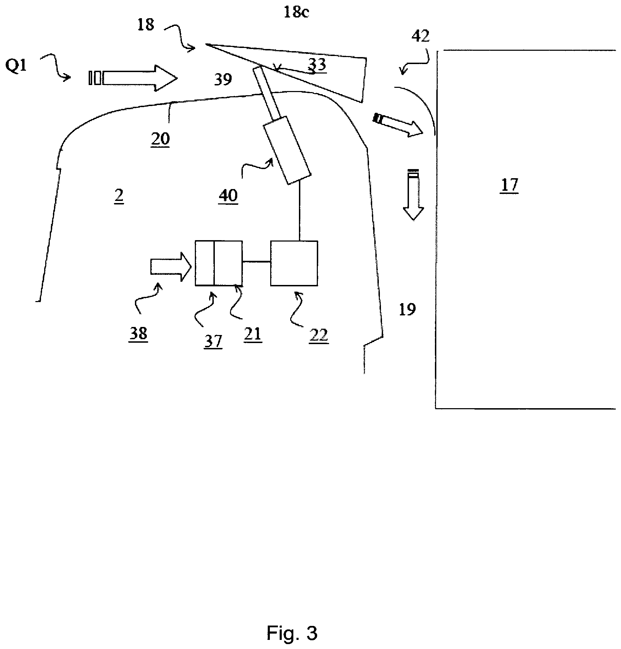

The embodiment described above is particularly suitable for use on vehicles with no cargo-carrying unit 17 or where the cargo-carrying unit 17 is so low as to not reach the same height as the air deflector 18. In such cases the air deflector 18 is required to direct the airflow Q1 down into the space 19. If on the contrary the vehicle is equipped with a cargo-carrying unit 17 which reaches at least the same height as the air deflector 18, it is possible to use the alternative embodiment illustrated in Fig. 3.

In this alternative embodiment, the air deflector 18, like that previously described, is arranged for pivoting between a first position 18a and a second position 18c which differs from the second position 18b in that the air deflector is so directed as to form between it and the cab roof 20 an air gap 39 through which the airflow Q1 can pass and impinge upon a forward surface of the cargo-carrying unit 17. This will result in a stagnation zone where the airflow Q1 meets the cargo-carrying unit 17, and in the airflow Q1 being directed down into the space 19. To facilitate this, a guide means 40 may create the air gap 39 by putting the air deflector into position 18c. The air deflector is activated in the same way as previously described. In an alternative embodiment a directing means 42 may be provided on the cargo-carrying unit 17 to direct the incoming airflow Q1 passing through the gap 39 in such a way that it is guided down into the space 19.

Fig. 1 schematically depicts second guide means 28, hereinafter called air deflector, which is fitted adjacent to the vehicle on the forward side of the cargo-carrying unit 17. The air deflector 28 may take the form of one or more platelike elements and may be static, i.e. not regulatable, and be adapted to guiding the airflow Q1 down into the space 19 between the cab's rear side 36 and the cargo-carrying unit 17 towards areas in the space 19 and/or below the cab 2 where the temperature is high. In an alternative embodiment the air deflector 28 is adjustable upwards and downwards in order to guide towards areas in the space 19 and/or below the cab 2 where the temperature is high the airflow Q1 which is directed downwards in the space 19 between the cab's rear side 36 and the cargo-carrying unit 17. An advantage of the air deflector 28 being adjustable is that the airflow Q1 can be guided towards different components and areas. Depending on where and how the vehicle is operating, variation of which components and areas need cooling is thus possible. The air deflector 28 is operated in suitable ways, e.g. by an electric motor (not depicted in the drawings) on the basis of control signals from the switching means 22. The air deflector 28 is with advantage as wide as the cargo-carrying unit 17 in order to achieve the most effective guidance possible of the airflow Q1.

Fig. 1 depicts a third guide means 29, hereinafter called air deflector, situated at the rear edge of the engine tunnel 16. The air deflector 29 may be static, i.e. not regulatable. In an alternative embodiment the air deflector 29 is regulatable and makes it possible, when in an angled position, for cooling air Q1 directed downwards into the space 19 to be guided in below the cab 2. The air deflector 29 may take the form of one or more platelike elements for guiding the air. The air deflector may also guide the airflow Q which flows in through the inlet aperture 12 in order to cool warm areas in the space 19. The air deflector 29 has a certain width to make it possible to direct the airflow, its magnitude being limited only by the geometry of the space/components surrounding the air deflector. The air deflector 29 can be adjusted upwards and downwards in order to guide the airflows Q1 and Q. It may for example be fitted on the rear cab bracket which is fastened to the frame members (not depicted in the drawings). The air deflector 29 is operated in a suitable way, e.g. by an electric motor (not depicted in the drawings) on the basis of control signals from the switching means 22.

Fig. 1 depicts a fourth guide means 30, hereinafter called air deflector, situated in the cab floor 6. The air deflector 30 may be static, i.e. not regulatable. In an alternative embodiment the air deflector 30 is regulatable and is operated via the cab control unit 21 depicted in Fig. 1. The air deflector 30 may take the form of one or more platelike elements. The air deflector 30 is adapted to guiding the cooling airflow Q coming in from the inlet aperture 12, but also to guiding the incoming airflow Q1 from the space at the rear edge of the engine tunnel 16. The air deflector 30 causes the cooling airflow Q coming in from the inlet aperture 12 to be directed somewhat downwards, causing the creation of two zones, one of them with high pressure in front of the air deflector 30, the other with low pressure behind the air deflector 30. This low pressure causes the warm air to be sucked out, making it easier for the cooling air to enter the space round the engine 8 and reach the space at the rear edge of the engine tunnel 16. The air deflector 30 has a certain width to make it possible to direct the airflow, its magnitude being limited only by the geometry of the space/components surrounding the air deflector 30. The air deflector 30 may be put into different positions depending on the directions of the airflows Q and Q1. The air deflector 30 is operated in a suitable way, e.g. by an electric motor (not depicted in the drawings) on the basis of control signals from the switching means 22.

The air deflectors 18, 28, 29 and 30 may be operated individually on the basis of the temperatures registered by the temperature detection means 26, 27. The cooling may be focused on the lower portion of the space 19, the area below the cab 2, the forward area below the cargo-carrying unit 17 or a combination of these areas. The cab control unit 21 may also do an analysis in case a maximum permissible temperature Tₘₐₓ will be reached, preferably by extrapolation of measured temperature values. The cab control unit 21 may thus prepare for the process of adjusting the air deflectors 18, 28, 29 and 30. In another embodiment the positions of the air deflectors are regulated on the basis of information from sensor signals concerning the vehicle's speed and/or itinerary. The air deflectors 18, 28, 29 and 30 may be activated in conjunction, but also individually depending on which area needs cooling. At least one of the air deflectors 18, 28, 29 and/or 30 is thus adapted to guiding substantially forwards in the vehicle's direction of movement the airflow directed towards the area of the rear side of the vehicle engine.

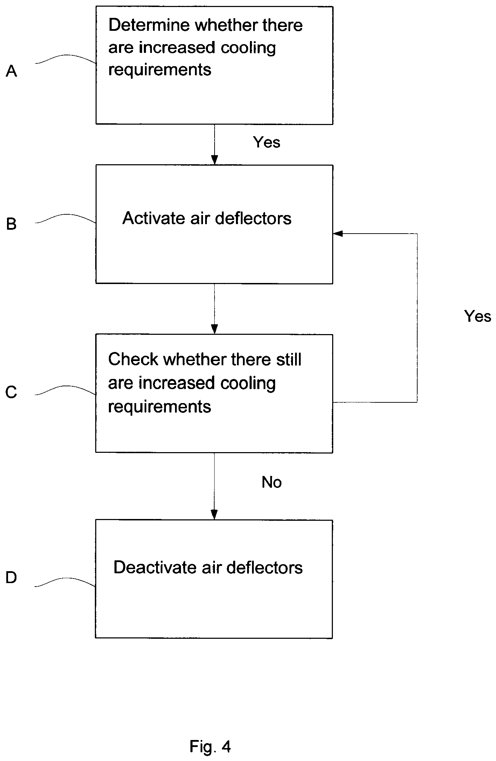

Fig. 4 is a flowchart showing steps A-D which are performed in order to direct the airflows Q and Q1 to where cooling is needed.

When the vehicle is moving at low speeds, e.g. when reversing, there is risk of problems due to high component temperatures. A first step A depicted in Fig. 4 determines whether there is or will be an increased cooling requirement. The cab control unit 21 receives sensor signals from various parts and components with a view to delivering control signals to the switching means 22. In one embodiment data about the road ahead of the vehicle are used to determine whether there are or will be increased cooling requirements. In particular, a computerised version of the configuration of the itinerary or data from a topography read-off means 25 may be used. In another embodiment component temperatures are determined via temperature detection means 26, 27. If the temperature T is above a maximum level Tₘₐₓ, the air deflectors are activated to guide the airflows Q and Q1. In a further embodiment the air deflectors are activated if the vehicle's speed V is below a highest speed Vₘₐₓ. The speed Vₘₐₓ must not be so high that the air deflectors might be exposed to excessive forces and the fuel consumption might increase. It is important that the determination of increased cooling requirements takes place in good time before the temperatures become too high . A combination of the above criteria for determining whether there will be increased cooling requirements may also be employed.

As a step B, when it is determined that there is or will be an increased cooling requirement the switching means 22 is acted upon by a control signal from at least one control unit 21, thereby activating the air deflectors 18, 28, 29 and 30. They may be activated in conjunction, individually or in combinations. Activating said air deflectors and angling them to guide the airflows Q and Q1 will result in better cooling of exposed components and exposed areas, e.g. below the cab 2.

As a step C there is thereafter continuous monitoring of whether there still are cooling requirements. For example, control signals from the cab control unit 21 may be used to determine that there will be an increased cooling requirement. In one embodiment the air deflector 18 is adjusted progressively depending on temperature T and vehicle speed V, and the control unit 21 monitors temperature and speed levels. If the temperature drops and/or the speed increases, the air deflector 18 will sink progressively back to a first position 18a. At for example a speed of 60 km/h, the air deflector 18 is angled at a maximum aperture of 15 degrees, at 65 km/h a maximum aperture angle of 10 degrees is allowed and at 70 km/h a maximum angle of 5 degrees. The angles referred to in these examples are measured between the cab roof 20 and the forward link arm 32 in an angled position.

If at step B it is determined that there are no longer any increased cooling requirements, said air deflectors are deactivated at a step D, otherwise the vehicle 1 continues with air deflectors activated. The air deflectors 18, 28, 29 and 30 may be activated in conjunction but also individually, depending on which areas need cooling.

The invention relates also to a computer programme product comprising computer programme instructions for enabling a computer system to perform steps according to the method described above when the programme instructions are run on said computer system. In one embodiment the programme instructions are stored on a medium which can be read by a computer system.

The invention is of course in no way restricted to the embodiments described above, since numerous possibilities for modifications of them are likely to be obvious to one skilled in the art without deviating from the basic concept of the invention such as is defined in the attached claims.

## Claims

1. An arrangement for cooling an area at the rear side of a vehicle engine (8) below and/or at the rear side (36) of a cab (2) of a freight vehicle (1), which cab (2) has a roof (20) on which an air deflector (18) of the arrangement is mountable in order, when in a first position (18a), to direct an airflow across a cargo-carrying unit (17) with which the vehicle (1) is provided, wherein the air deflector (18) is regulatable between the first position (18a) and a second position (18b, 18c), in which second position (18b, 18c) the airflow is guided through a space between the air deflector (18) and the cab roof (20), at least one guide surface (41b) is situated at the height of the cab roof (20) in order to direct the airflow down by means of the guiding surface (41b) into the area at the rear side of the vehicle engine (8), via a space (19) between the cab's rear side (36) and the cargo-carrying unit (17), to cool the area at the rear side of a vehicle engine (8), **characterised in that** the arrangement comprises at least one cab control unit (21) and switching means (22), wherein the air deflector (18) is controlled by the switching means (22) which are adapted to receiving control signals from the at least one cab control unit (21), and wherein the at least one cab control unit (21) is arranged to determine that there are or will be increased cooling requirements and in response to determination that there are or will be increased cooling requirements, regulating the air deflector (18) between the first position (18a) and the second position (18b, 18c) in order to direct the airflow down through the space between the air deflector (18) and the cab roof (20).

2. An arrangement for cooling according to claim 1, **characterised in that** the guide surface (41b) is on a side (41b) of the air deflector (18) which faces towards the cab roof (20).

3. An arrangement for cooling according to claim 1, **characterised in that** the guide surface (42) is arrangeable on the cargo-carrying unit (17).

4. An arrangement for cooling according to claim 3, **characterised in that** the guide surface (41b) is situated adjacent to an actuating means (31) for regulating the air deflector (18) from a first position (18a) to a second position (18b, 18c) and from a second position (18b, 18c) to a first position (18a).

5. An arrangement according to claim 1, **characterised in that** at least one guide means (28, 29, 30) is adapted to guiding forwards in the vehicle's direction of movement the airflow directed towards the area at the rear side of the vehicle engine (8).

6. An arrangement according to claim 5, **characterised in that** the guide means (28) is adjustable in vertical directions in order to direct the airflow (Q1) down into the space between the cab's rear side (36) and the cargo-carrying unit (17) towards areas in the space (19) between the cab's rear side (36) and the cargo-carrying unit (17) and/or below the cab (2).

7. An arrangement according to claims 1 and 5, **characterised in that** the guide means (29) is adjustable in vertical directions in order to direct the airflow (Q1) down towards areas in the space (19) between the cab's rear side (36) and the cargo-carrying unit (17) and/or below the cab (2).

8. An arrangement according to claims 1 and 5, **characterised in that** guide means (30) is situated below the cab (2) in order to guide incoming airflow (Q) from an inlet aperture (12) and/or incoming airflow (Q1) from the space at the rear edge of the engine tunnel (16).

9. An arrangement according to claim 1, 4 or 5, **characterised in that** the guide means (28, 29, 30) are controlled by the switching means (22) which are adapted to receiving control signals from at least one cab control unit (21).

10. An arrangement according to claim 1 or 9, **characterised in that** the control signals are based on information from vehicle speed detection means (37), temperature detection means (26, 27), topography read-off means (25) and/or location determination means (43).

11. A method for cooling an area at the rear side of a vehicle engine (8) below and/or at the rear side (36) of a cab (2) of a freight vehicle (1), which cab (2) has a roof (20) on which an air deflector (18) is situated in order, when in a first position (18a), to direct an airflow across a cargo-carrying unit (17) with which the vehicle (1) is provided, **characterised by** the steps of
- determining that there are or will be increased cooling requirements,
- regulating the air deflector (18) between the first position (18a) and a second position (18b, 18c) in order to direct the airflow down, by means of the guiding surface (41b), through a space between the air deflector (18) and the cab roof (20) into an area at the rear side of the vehicle engine (8), via a space (19) between the cab's rear side (36) and the cargo-carrying unit (17), to cool the area at the rear side of a vehicle engine (8), in response to determination that there are or will be increased cooling requirements,
- monitoring continuously whether there still are or will be cooling requirements,
- regulating the air deflector (18) between a second position (18b, 18c) and a first position (18a) when there are no longer or will no longer be cooling requirements.

12. A method according to claim 11, **characterised by** the step of
- regulating at least one of the guide means (28, 29, 30) to direct the airflow when there are or will be cooling requirements.

13. A method according to claim 11 or 12, **characterised in that** the determination that there are or will be cooling requirements is conducted by means of information from vehicle speed detection means (37), temperature detection means (26, 27), topography read-off means (25) and/or location determination means (43).

14. A computer programme product comprising computer programme instructions for enabling a computer system to perform steps according to claim 11 when the programme instructions are run on said computer system.

15. A computer programme product according to claim 14, in which the programme instructions are stored on a medium which can be read by a computer system.

## Patentansprüche

1. Anordnung zum Kühlen eines Bereichs an der hinteren Seite eines Fahrzeugmotors (8) unter und/oder an der hinteren Seite (36) einer Kabine (2) eines Frachtfahrzeugs (1), wobei die Kabine (2) ein Dach (20) aufweist, an dem ein Windabweiser (18) der Anordnung angebracht werden kann, um, wenn er sich in einer ersten Position (18a) befindet, einen Luftfluss über eine Ladung befördernde Einheit (17) zu leiten, mit welcher das Fahrzeug (1) ausgestattet ist, wobei der Windabweiser (18) zwischen der ersten Position (18a) und einer zweiten Position (18b, 18c) einstellbar ist, wobei der Luftfluss in der zweiten Position (18b, 18c) durch einen Raum zwischen dem Windabweiser (18) und dem Kabinendach (20) geleitet wird, wobei zumindest eine Führungsfläche (41b) auf der Höhe des Kabinendachs (20) angeordnet ist, um den Luftfluss mittels der Führungsfläche (41b) nach unten in den Bereich an der hinteren Seite des Fahrzeugmotors (8) hinein über einen Raum (19) zwischen der hinteren Seite (36) der Kabine und der Ladung befördernden Einheit (17) zu leiten, um den Bereich an der hinteren Seite eines Fahrzeugmotors (8) zu kühlen, **dadurch gekennzeichnet, dass** die Anordnung zumindest eine Kabinensteuereinheit (21) und Schaltmittel (22) umfasst, wobei der Windabweiser (18) von den Schaltmitteln (22) gesteuert wird, die dazu eingerichtet sind, Steuersignale von der zumindest einen Kabinensteuereinheit (21) zu empfangen, und wobei die zumindest eine Kabinensteuereinheit (21) dazu eingerichtet ist, zu bestimmen, dass erhöhte Kühlanforderungen vorliegen oder vorliegen werden, und dazu, in Reaktion auf eine Bestimmung, dass erhöhte Kühlanforderungen vorliegen oder vorliegen werden, den Windabweiser (18) zwischen der ersten Position (18a) und der zweiten Position (18b, 18c) einzustellen, um den Luftfluss durch den Raum zwischen dem Windabweiser (18) und dem Kabinendach (20) zu leiten.

2. Anordnung zum Kühlen gemäß Anspruch 1, **dadurch gekennzeichnet, dass** die Führungsfläche (41b) auf einer Seite (41b) des Windabweisers (18) ist, die dem Kabinendach (20) zugewandt ist.

3. Anordnung zum Kühlen gemäß Anspruch 1, **dadurch gekennzeichnet, dass** die Führungsfläche (42) an der Ladung befördernden Einheit (17) anordenbar ist.

4. Anordnung zum Kühlen gemäß Anspruch 3, **dadurch gekennzeichnet, dass** die Führungsfläche (41b) neben einem Betätigungsmittel (31) zum Einstellen des Windabweisers (18) von einer ersten Position (18a) zu einer zweiten Position (18b, 18c) und von einer zweiten Position (18b, 18c) zu einer ersten Position (18a) angeordnet ist.

5. Anordnung gemäß Anspruch 1, **dadurch gekennzeichnet, dass** zumindest ein Führungsmittel (28, 29, 30) dazu eingerichtet ist, den Luftfluss, der zu dem Bereich an der hinteren Seite des Fahrzeugmotors (8) gerichtet ist, vorwärts in die Bewegungsrichtung des Fahrzeugs zu leiten.

6. Anordnung gemäß Anspruch 5, **dadurch gekennzeichnet, dass** das Führungsmittel (28) in vertikale Richtungen einstellbar ist, um den Luftfluss (Q1) nach unten in den Raum zwischen der hinteren Seite (36) der Kabine und der Ladung befördernden Einheit (17) hinein und in den Raum (19) zwischen der hinteren Seite (36) der Kabine und der Ladung befördernden Einheit (17) und/oder unter die Kabine (2) zu leiten.

7. Anordnung gemäß Anspruch 1 und 5, **dadurch gekennzeichnet, dass** das Führungsmittel (29) in vertikale Richtungen einstellbar ist, um den Luftfluss (Q1) nach unten zu Bereichen in dem Raum (19) zwischen der hinteren Seite (36) der Kabine und der Ladung befördernden Einheit (17) und/oder unter die Kabine (2) zu leiten.

8. Anordnung gemäß Anspruch 1 und 5, **dadurch gekennzeichnet, dass** das Führungsmittel (30) unter der Kabine (2) angeordnet ist, um einen einströmenden Luftfluss (Q) von einer Einlassöffnung (12) und/oder einen einströmenden Luftfluss (Q1) von dem Raum an der hinteren Kante des Motortunnels (16) zu führen.

9. Anordnung gemäß Anspruch 1, 4 oder 5, **dadurch gekennzeichnet, dass** die Führungsmittel (28, 29, 30) von den Schaltmitteln (22) gesteuert sind, die dazu eingerichtet sind, Steuersignale von zumindest einer Kabinensteuereinheit (21) zu empfangen.

10. Anordnung gemäß Anspruch 1 oder 9, **dadurch gekennzeichnet, dass** die Steuersignale auf Information von Fahrzeuggeschwindigkeit-Erkennungsmitteln (37), Temperatur-Erkennungsmitteln (26, 27), Topographie-Abtastmitteln (25) und/oder Standort-Bestimmungsmitteln (43) basieren.

11. Verfahren zum Kühlen eines Bereichs an der hinteren Seite eines Fahrzeugmotors (8) unter und/oder an der hinteren Seite (36) einer Kabine (2) eines Frachtfahrzeugs (1), wobei die Kabine (2) ein Dach (20) aufweist, an dem ein Windabweiser (18) der Anordnung angebracht werden kann, um, wenn er sich in einer ersten Position (18a) befindet, einen Luftfluss über eine Ladung befördernde Einheit (17) zu leiten, mit welcher das Fahrzeug (1) ausgestattet ist, **gekennzeichnet durch** die Schritte:
- Bestimmen, dass erhöhte Kühlanforderungen vorliegen oder vorliegen werden,
- Einstellen des Luftabweiser (18) zwischen der ersten Position (18 a) und einer zweiten Position (18 b, 18 c), um den Luftfluss mittels der Führungsfläche (41b) nach unten in den Bereich an der hinteren Seite des Fahrzeugmotors (8) hinein über einen Raum (19) zwischen der hinteren Seite (36) der Kabine und der Ladung befördernden Einheit (17) zu leiten, um den Bereich an der hinteren Seite eines Fahrzeugmotors (8) zu kühlen, in Reaktion auf eine Bestimmung, dass erhöhte Kühlanforderungen vorliegen oder vorliegen werden,
- kontinuierliches Überwachen, ob noch immer Kühlanforderungen vorliegen oder vorliegen werden,
- Einstellen des Windabweisers (18) zwischen einer zweiten Position (18 b, 18 c) und einer ersten Position (18 a), wenn nicht länger Kühlanforderungen vorliegen oder vorliegen werden.

12. Verfahren gemäß Anspruch 11, **gekennzeichnet durch** den Schritt:
- Einstellen zumindest eines der Führungsmittel (28, 29, 30), um den Luftfluss zu leiten, wenn Kühlanforderungen vorliegen oder vorliegen werden.

13. Verfahren gemäß Anspruch 11 oder 12, **dadurch gekennzeichnet, dass** die Bestimmung, dass Kühlanforderungen vorliegen oder vorliegen werden, mittels Information von Fahrzeuggeschwindigkeit-Erkennungsmitteln (37), Temperatur-Erkennungsmitteln (26, 27), Topographie-Abtastmitteln (25) und/oder Standort-Bestimmungsmitteln (43) durchgeführt wird.

14. Computerprogrammprodukt, umfassend Computerprogrammanweisungen, um ein Computersystem in die Lage zu versetzen, Schritte gemäß Anspruch 11 durchzuführen, wenn die Programmanweisungen auf dem Computersystem ausgeführt werden.

15. Computerprogrammprodukt gemäß Anspruch 14, bei dem die Programmanweisungen auf einem Medium gespeichert sind, das von einem Computersystem gelesen werden kann.

## Revendications

1. Agencement pour le refroidissement d'une zone au niveau du côté arrière d'un moteur de véhicule (8) en dessous et/ou au niveau du côté arrière (36) d'une cabine (2) d'un véhicule de transport de marchandise (1), laquelle cabine (2) a un toit (20) sur lequel un déflecteur d'air (18) de l'agencement peut être monté afin, dans une première position (18a), d'orienter un écoulement d'air à travers une unité de transport de charge (17) avec laquelle le véhicule (1) est fourni, le déflecteur d'air (18) étant réglable entre la première position (18a) et une deuxième position (18b, 18c), deuxième position (18b, 18c) dans laquelle l'écoulement d'air est guidé à travers un espace entre le déflecteur d'air (18) et le toit de cabine (20), au moins une surface de guidage (41b) est située au niveau de la hauteur du toit de cabine (20) afin de diriger l'écoulement d'air vers le bas au moyen de la surface de guidage (41b) dans la zone au niveau du côté arrière du moteur de véhicule (8), via un espace (19) entre le côté arrière de la cabine (36) et l'unité de transport de charge (17), pour refroidir la zone au niveau du côté arrière d'un moteur de véhicule (8), **caractérisé en ce que** l'agencement comprend au moins une unité de commande de cabine (21) et des moyens de commutation (22), le déflecteur d'air (18) étant commandé par les moyens de commutation (22) qui sont adaptés pour la réception de signaux de commande de l'au moins une unité de commande de cabine (21), et l'au moins une unité de commande de cabine (21) étant agencée pour déterminer la nécessité présente ou future d'augmenter le refroidissement et en réponse à la détermination de la nécessité présente ou future d'augmenter le refroidissement, régler le déflecteur d'air (18) entre la première position (18a) et la deuxième position (18b, 18c) afin de diriger l'écoulement d'air vers le bas à travers l'espace entre le déflecteur d'air (18) et le toit de cabine (20) .

2. Agencement pour le refroidissement selon la revendication 1, **caractérisé en ce que** la surface de guidage (41b) se trouve sur un côté (41b) du déflecteur d'air (18) qui est tourné vers le toit de cabine (20).

3. Agencement pour le refroidissement selon la revendication 1, **caractérisé en ce que** la surface de guidage (42) peut être agencée sur l'unité de transport de charge (17).

4. Agencement pour le refroidissement selon la revendication 3, **caractérisé en ce que** la surface de guidage (41b) est située à côté d'un moyen d'actionnement (31) pour le réglage du déflecteur d'air (18) depuis une première position (18a) vers une deuxième position (18b, 18c) et depuis une deuxième position (18b, 18c) vers une première position (18a).

5. Agencement selon la revendication 1, **caractérisé en ce qu'**au moins un moyen de guidage (28, 29, 30) est adapté pour le guidage vers l'avant dans la direction de déplacement du véhicule, de l'écoulement d'air dirigé vers la zone au niveau du côté arrière du moteur de véhicule (8).

6. Agencement selon la revendication 5, **caractérisé en ce que** le moyen de guidage (28) est réglable dans les directions verticales afin de diriger l'écoulement d'air (Q1) vers le bas dans l'espace entre le côté arrière de la cabine (36) et l'unité de transport de charge (17) vers des zones dans l'espace (19) entre le côté arrière de la cabine (36) et l'unité de transport de charge (17) et/ou en dessous de la cabine (2).

7. Agencement selon les revendications 1 et 5, **caractérisé en ce que** le moyen de guidage (29) est réglable dans les directions verticales afin de diriger l'écoulement d'air (Q1) vers le bas vers des zones dans l'espace (19) entre le côté arrière de la cabine (36) et l'unité de transport de charge (17) et/ou en dessous de la cabine (2).

8. Agencement selon les revendications 1 et 5, **caractérisé en ce que** le moyen de guidage (30) est situé en dessous de la cabine (2) en vue d'orienter l'écoulement d'air entrant (Q) depuis une ouverture d'admission (12) et/ou l'écoulement d'air entrant (Q1) depuis l'espace au niveau du bord arrière du tunnel de moteur (16).

9. Agencement selon la revendication 1, 4 ou 5, **caractérisé en ce que** les moyens de guidage (28, 29, 30) sont commandés par les moyens de commutation (22) qui sont adaptés pour la réception de signaux de commande d'au moins une unité de commande de cabine (21).

10. Agencement selon la revendication 1 ou 9, **caractérisé en ce que** les signaux de commande se basent sur des informations provenant de moyens de détection de vitesse de véhicule (37), de moyens de détection de température (26, 27), de moyens de lecture de topographie (25) et/ou de moyens de détermination d'emplacement (43).

11. Procédé pour le refroidissement d'une zone au niveau du côté arrière d'un moteur de véhicule (8) en dessous et/ou au niveau du côté arrière (36) d'une cabine (2) d'un véhicule de transport de marchandise (1), laquelle cabine (2) a un toit (20) sur lequel un déflecteur d'air (18) est situé afin, dans une première position (18a), d'orienter un écoulement d'air en travers d'une unité de transport de charge (17) avec laquelle le véhicule (1) est fourni, **caractérisé par** les étapes consistant à
- déterminer la nécessité présente ou future d'une augmentation du refroidissement,
- régler le déflecteur d'air (18) entre la première position (18a) et une deuxième position (18b, 18c) afin de diriger l'écoulement d'air vers le bas, au moyen de la surface de guidage (41b), à travers un espace entre le déflecteur d'air (18) et le toit de cabine (20) dans une zone au niveau du côté arrière du moteur de véhicule (8), via un espace (19) entre le côté arrière de la cabine (36) et l'unité de transport de charge (17), pour refroidir la zone au niveau du côté arrière d'un moteur de véhicule (8), en réponse à la détermination de la nécessité présente ou future d'une augmentation du refroidissement,
- surveiller en continu l'existence présente ou future d'exigences de refroidissement,
- régler le déflecteur d'air (18) entre une deuxième position (18b, 18c) et une première position (18a) en l'absence présente ou future d'exigences de refroidissement.

12. Procédé selon la revendication 11, **caractérisé par** l'étapes consistant à
- régler au moins l'un des moyens de guidage (28, 29, 30) pour orienter l'écoulement d'air en cas d'exigences présentes ou futures de refroidissement.

13. Procédé selon la revendication 11 ou 12, **caractérisé en ce que** la détermination d'exigences présentes ou futures de refroidissement est réalisée au moyen d'informations provenant de moyens de détection de vitesse de véhicule (37), de moyens de détection de température (26, 27), de moyens de lecture de topographie (25) et/ou de moyens de détermination d'emplacement (43).

14. Produit de programme informatique comprenant des instructions de programme informatique pour permettre à un système informatique d'exécuter les étapes selon la revendication 11, lorsque les instructions de programme sont exécutées sur ledit système informatique.

15. Produit de programme informatique selon la revendication 14, dans lequel les instructions de programme sont stockées sur un support qui peut être lu par un système informatique.
